# EUROPÄISCHE PATENTSCHRIFT

(11) **EP 1 435 671 B1**
(45) Veröffentlichungstag und Bekanntmachung des Hinweises auf die Patenterteilung: **28.06.2006**
(21) Anmeldenummer: 03022454.7
(22) Anmeldetag: 08.10.2003
(51) Int. Cl.: H01M 8/02, H01M 8/24

(54) **Fluidkanalkonfiguration für einen Brennstoffzellenstapel**
Configuration of fluid channels for a fuel cell stack
Configuration des canaux de fluide pour une pile à combustible

(30) Priorität: 22.10.2002 DE 10249298
(43) Veröffentlichungstag der Anmeldung: 07.07.2004
(73) Patentinhaber: Behr GmbH & Co. KG, 70469 Stuttgart (DE)
(72) Erfinder: Damsohn, Herbert, Dr.-Ing., 73773 Aichwald (DE); Kaiser, Wolfram, 79848 Bonndorf (DE)
(74) Vertreter: Grauel, Andreas

(56) Entgegenhaltungen:
- DE-A- 10 015 360
- US-A- 4 037 023
- US-B1- 6 296 962

## Beschreibung

Die Erfindung betrifft einen Brennstoffzellenstapel zur Gewinnung von elektrischem Strom, der aus zumindest einer Brennstoffzelle besteht.

Die Umwandlung von chemischer in elektrische Energie mittels Brennstoffzellen stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen sind folgende Reaktionen:

H₂ ⇒ 2H⁺ + 2e⁻ (Anodische Reaktion)

2H⁺ + 2e⁻ +½ O₂ ⇒ H₂O (Kathodische Reaktion)

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinandergestapelt und ein Brennstoffzellenstapel als Stromquelle verwendet.

Eine Brennstoffzelle umfaßt dabei eine Elektrolyteinheit, welche die Reaktanden Wasserstoff und Sauerstoff voneinander trennt und eine lonenleitfähigkeit, insbesondere eine H⁺-Protonenleitfähigkeit, aufweist, sowie aus zwei mit Katalysatormaterial belegten Elektroden, die unter anderem zum Abgriff des von der Brennstoffzelle erzeugten elektrischen Stroms erforderlich sind.

Die Reaktanden Wasserstoff und Sauerstoff und das Reaktionsprodukt Wasser sowie gegebenenfalls ein Kühlmittel zum Abtransport überschüssiger Reaktionswärme strömen durch Fluidkanäle, wobei die Reaktanden nicht notwendigerweise in reiner Form vorliegen müssen. Beispielsweise kann das Fluid auf der Kathodenseite Luft sein, deren Sauerstoff an der Reaktion teilnimmt. Insbesondere bei Verwendung eines Kühlmittels wird durch eine thermische Verbindung der jeweiligen Fluidkanäle für einen ausreichenden Wärmeübertrag zwischen den jeweiligen Fluiden gesorgt.

In der DE 100 15 360 A1 wird eine Separatorplatte für Brennstoffzellen beschrieben, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem für ein Kühlmittel und an den Außenflächen jeder Platte ein Kanalsystem für Gasströme.

Während des Betriebes von Brennstoffzellen mit derartigen Separatorplatten wird durch den Einsatz eines Kühlmittels die Temperatur der Reaktanden über einen Großteil der Fläche der Platten auf einem im wesentlichen konstanten Niveau gehalten.

Bei Brennstoffzellenstapeln der eingangs genannten Art ist eine gewichts- und volumenspezifische Leistungsdichte im Wesentlichen durch das Gewicht und die Bauhöhe der verwendeten Separatoreinheiten bestimmt.

Aufgabe der Erfindung ist es, einen Brennstoffzellenstapel mit gesteigerter spezifischer Leistungsdichte bereitzustellen.

Diese Aufgabe wird durch einen Brennstoffzellenstapel mit den Merkmalen des Anspruchs 1 gelöst.

Gemäß Anspruch 1 umfaßt ein erfindungsgemäßer Brennstoffzellenstapel zumindest eine Brennstoffzellen-Membran-Elektroden-Einheit, wie Brennstoffzellen-MEA, zur Gewinnung von elektrischer Energie. Bevorzugt umfaßt der Brennstoffzellenstapel mehrere elektrisch in Serie geschaltete Brennstoffzellen, wodurch eine gewünschte elektrische Spannung erreichbar ist. Die zumindest eine Brennstoffzellen-MEA weist zumindest eine Elektrolyteinheit, die durchlässig für Ionen, wie beispielsweise Wasserstoffionen, ist, und zwei elektrisch leitfähige Elektroden auf. Die Elektroden sind dabei beispielsweise als sogenannte Gasdiffusions-Elektroden ausgebildet

Insbesondere zur räumlichen Trennung jeweils zweier Brennstoffzellen-MEAs weist der Brennstoffzellenstapel zumindest eine Separatoreinheit auf, die erste, zweite und dritte Fluidkanäle aufweist. Über zumindest einen ersten Fluidkanal ist zumindest eine erste Elektrode mit einem ersten Fluid, beispielsweise einem Prozeßgas, beaufschlagbar. Zumindest ein zweiter Fluidkanal dient der Beaufschlagung zumindest einer zweiten Elektrode mit einem zweiten Fluid, beispielsweise einem zweiten Prozeßgas. Bevorzugt weist eine Separatoreinheit mehrere erste und mehrere zweite Fluidkanäle auf, damit das erste und das zweite Fluid flächenhaft verteilbar sind.

Der zumindest eine erste und der zumindest eine zweite Fluidkanal können beispielsweise durch zumindest eine Platte getrennt sein, die Teil der Separatoreinheit ist. Insbesondere können die ersten und/oder die zweiten Fluidkanäle mittels eines Prägeverfahrens als Vertiefungen in die Platte eingeprägt sein.

Die Aufgabe der Erfindung wird dadurch gelöst, daß die Summe der Höhe eines ersten und eines zweiten Fluidkanals einschließlich ihrer Kanalwandungen größer als die Höhe der zumindest einen Separatoreinheit ist. Dies bedeutet, daß die ersten Fluidkanäle geometrisch nicht durch eine ebene Fläche von den zweiten Fluidkanälen trennbar sind. Durch ein solches beispielsweise kammartiges Ineinandergreifen von ersten und zweiten Fluidkanälen ist die benötigte Gesamtbauhöhe der Separatoreinheit bei vorgegebenen Kanalhöhen für erste und zweite Kanäle reduziert. Damit ist das Gesamtvolumen des Brennstoffzellenstapels verringert und dessen volumenspezifische Leistungsdichte vorteilhaft erhöht. Ein vorteilhafter Nebeneffekt ist gegebenenfalls eine Verkleinerung der dritten Fluidkanäle, die beispielsweise für ein Kühlfluid vorgesehen sind, auf einen kleinen Querschnitt, der unter Umständen kleiner als der Querschnitt der ersten und/oder zweiten Fluidkanäle ist.

Unter der Höhe oder Gesamtbauhöhe der Separatoreinheit ist im Rahmen der vorliegenden Erfindung die Höhe der Separatoreinheit in dem Bereich zu verstehen, in dem Elektroden benachbarter Brennstoffzellen-MEAs mit einem ersten beziehungsweise mit einem zweiten Fluid beaufschlagt werden. Häufig wird dieser Bereich als Flowfield bezeichnet. Insbesondere in Randbereichen der Separatoreinheit, in denen sich unter Umständen Sammelkanäle und/oder Verteilkammem befinden, kann die Separatoreinheit auch eine größere Höhe aufweisen. Insbesondere kann die Höhe der Separatoreinheit in solchen Bereichen auch größer sein als die Summe der Höhen der ersten und zweiten Fluidkanäle, ohne den Rahmen der Erfindung zu verlassen, solange die Höhe der Separatoreinheit zumindest in dem sogenannten Flowfieldbereich kleiner ist als die Summe der Höhen der ersten und zweiten Fluidkanäle.

Gemäß einer besonders bevorzugten Ausführungsform eines erfindungsgemäßen Brennstoffzellenstapels erstreckt sich zumindest ein erster Fluidkanal im Wesentlichen über die gesamte Höhe der Separatoreinheit. Nach einer vorteilhaften Weiterbildung sind ein zweiter und ein dritter Fluidkanal im Wesentlichen übereinander angeordnet. Insbesondere im Falle einer aus zwei Platten bestehenden Separatoreinheit ergibt sich hierdurch eine vereinfachte Bauweise. In diesem Fall sind die ersten Fluidkanäle durch Vertiefungen in einer ersten Platte und die zweiten Fluidkanäle durch Vertiefungen in einer zweiten Platte verwirklicht. Die Separatoreinheit entsteht dann durch einfaches Ineinanderlegen beziehungsweise Ineinanderfügen der beiden Platten. Sich zwischen den beiden Platten ausbildende Hohlräume dienen der Beaufschlagung mit einem dritten Fluid, beispielsweise einem Kühlmittel.

In einer bevorzugten Ausführungsform der Erfindung ist zumindest ein Sammelkanal zur Verteilung eines Fluids auf mehrere erste, zweite oder dritte Fluidkanäle und zumindest ein Sammelkanal zur Sammlung des Fluids aus den ersten, zweiten bzw. dritten Fluidkanälen vorgesehen. Durch eine Integration der Sammelkanäle in den Brennstoffzellenstapel wird eine kompakte Bauweise erreicht. Insbesondere bei mehreren sich abwechselnden ersten, zweiten und dritten Fluidkanälen wird durch integrierte Sammelkanäle mit Hilfe einer geeigneten Anordnung der Fluidkanäle ein besonders einfacher Aufbau des Brennstoffzellenstapels ermöglicht.

Gemäß einer Weiterbildung geschieht die Verteilung und/oder Sammlung des ersten, zweiten und/oder dritten Fluids über eine oder mehrere Verteilkammem, die zwischen dem jeweiligen Sammelkanal und den jeweiligen Fluidkanälen derart angeordnet ist/sind, daß Fluidkanäle, die verschiedenen Fluiden zugeordnet sind, nicht miteinander kommunizieren. Bevorzugt werden die Verteilkammem durch zumindest stellenweise miteinander kommunizierende Vertiefungen zweier benachbarter Platten gebildet. Besonders bevorzugt werden die Verteilkammem mit den Fluidkanälen zusammen gefertigt, beispielsweise während eines Prägeverfahrens.

Gemäß eines weiteren Grundgedankens der Erfindung ragt eine Verteilkammer zumindest bereichsweise über eine Kontaktebene zwischen einer aktiven Zellfläche der Separatoreinheit und einer Elektrode einer benachbarten Membran-Elektroden-Einheit, wie MEA, hinaus. Dadurch wird trotz einer geringen Bauhöhe der Separatoreinheit eine ausreichende Versorgung der dritten Fluidkanäle mit einem dritten Fluid sichergestellt. Ein Druckabfall sowohl des ersten, des zweiten als auch des dritten Fluids über den gesamten Brennstoffzellenstapel kann somit trotz eines geringen Bauvolumens und damit verbundener hoher Leistungsdichte gering gehalten werden.

Bevorzugt ragt die Verteilkammer jedoch nicht über die MEA der benachbarten Brennstoffzelle hinaus. Besonders bevorzugt ragt die Verteilkammer auch nicht über die an die Separatoreinheit angrenzende elektrode der benachbarten Brennstoffzelle hinaus, wodurch gewährleistet ist, daß MEAs und Separatoreinheiten aneinanderliegend aufeinander stapelbar sind.

Gemäß einer bevorzugten Ausgestaltung weist zumindest eine Separatoreinheit zwei Platten auf, zwischen denen die dritten Fluidkanäle angeordnet sind. Sind die Platten dünn ausgebildet, sind sie, beispielsweise durch ein Prägeverfahren, sehr einfach mit Vertiefungen, die der Bildung von Fluidkanälen dienen können, versehbar. Die Fluidkanäle können durch Vertiefungen in einer Platte verwirklicht sein, die gegenüber einer ebenen Oberfläche einer benachbarten Platte angeordnet sind. Genauso gut können Vertiefungen einer Platte Erhöhungen einer benachbarten Platte gegenüber angeordnet sein, wobei dann die Höhe der dritten Fluidkanäle durch die Differenz zwischen der Höhe der Vertiefungen und der Höhe der Erhöhungen gegeben ist.

Gemäß einer bevorzugten Weiterbildung besteht die zumindest eine Separatoreinheit im Wesentlichen aus einem elektrisch leitfähigen Material, beispielsweise einem Metall oder einer Legierung. Damit können die Elektroden ohne zusätzlichen Aufwand kontaktiert werden. Insbesondere bei einer elektrischen Serienschaltung wird unter Verwendung einer geringen Anzahl von Stapelschichten in den Brennstoffzellenstapel ein Stromfluß von jeweils einer Brennstoffzelle zu einer benachbarten Brennstoffzelle ermöglicht.

Gemäß einer bevorzugten Ausführungsform der Erfindung wechseln sich bei der Stapelung zumindest zwei verschiedene Separatoreinheiten ab. Dadurch wird vermieden, daß unter Umständen auf zwei gegenüberliegenden Seiten einer Brennstoffzelle ein Steg zwischen zwei Fluidkanälen einer Separatoreinheit gegenüber einem Fluidkanal einer anderen Separatoreinheit zu liegen kommt und die gegebenenfalls verformbare, dazwischen liegende Brennstoffzelle in den Fluidkanal hinein drückt.

Die Erfindung wird nachfolgend anhand von Ausführungsbeispielen unter Bezugnahme auf die Zeichnungen näher erläutert. Es zeigen:
- Fig. 1:: Eine schematische Schrägansicht eines Brennstoffzellenstapels,
- Fig. 2:: eine perspektivische Ansicht eines Ausschnitts einer Separatoreinheit,
- Fig. 3:: eine perspektivische Ansicht eines Ausschnitts einer Separatoreinheit,
- Fig. 4:: eine Querschnittsansicht eines Brennstoffzellenstapels,
- Fig. 5:: eine perspektivische Ansicht einer Separatoreinheit,
- Fig. 6:: eine perspektivische Ansicht einer aufgebrochenen Separatoreinheit,
- Fig. 7:: eine perspektivische Ansicht einer Separatoreinheit und

- Fig. 8:: eine perspektivische Ansicht einer aufgebrochenen Separatoreinheit.

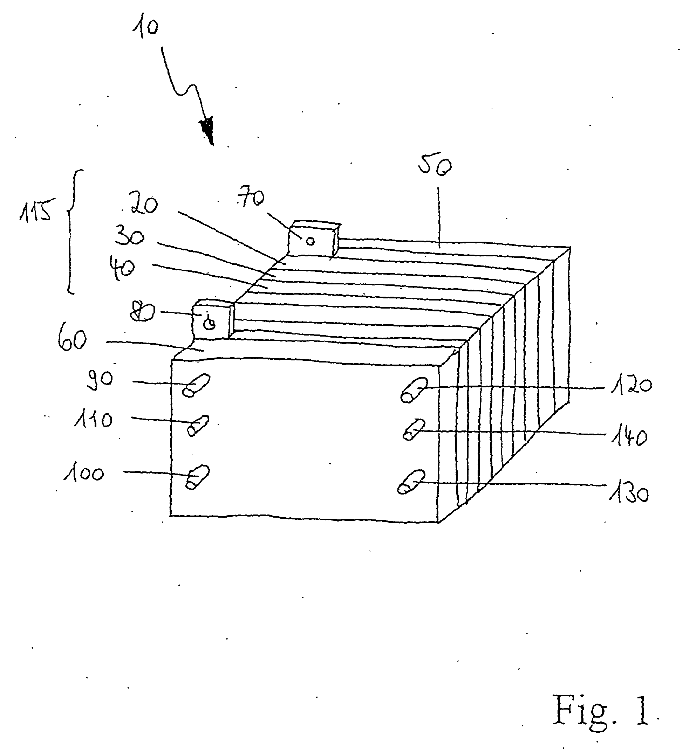

In Fig. 1 ist ein bevorzugtes Ausführungsbeispiel eines Brennstoffzellenstapels 10 schematisch dargestellt. Der Brennstoffzellenstapel 10 ist aus mehreren Einzel-Brennstoffzellen 20, 30 und 40 schichtartig aufgebaut und von Endplatten 50 und 60 eingefaßt. Zur Stromabnahme sind zwei Kontaktelemente 70 und 80 vorgesehen. Der Brehnstoffzellenstapel 10 weist für zwei Betriebsgase und ein Kühlmittel je einen nicht gezeigten Sammelkanal auf, der jeweils über einen Anschlußstutzen 90 bzw. 100 mit einem Betriebsgas bzw. über einen Anschlußstutzen 110 mit einem Kühlmittel beaufschlagbar ist. Von den jeweiligen Sammelkanälen aus durchströmen die Betriebsgase und das Kühlmittel den Brennstoffzellenstapel 115, um anschließend in je einem nicht dargestellten Sammelkanal aufgefangen zu werden. Schließlich verlassen die Betriebsgase und gegebenenfalls angefallene Reaktionsprodukte den Brennstoffzellenstapel durch die Anschlußstutzen 120 und 130 und das Kühlmittel durch den Anschlußstutzen 140.

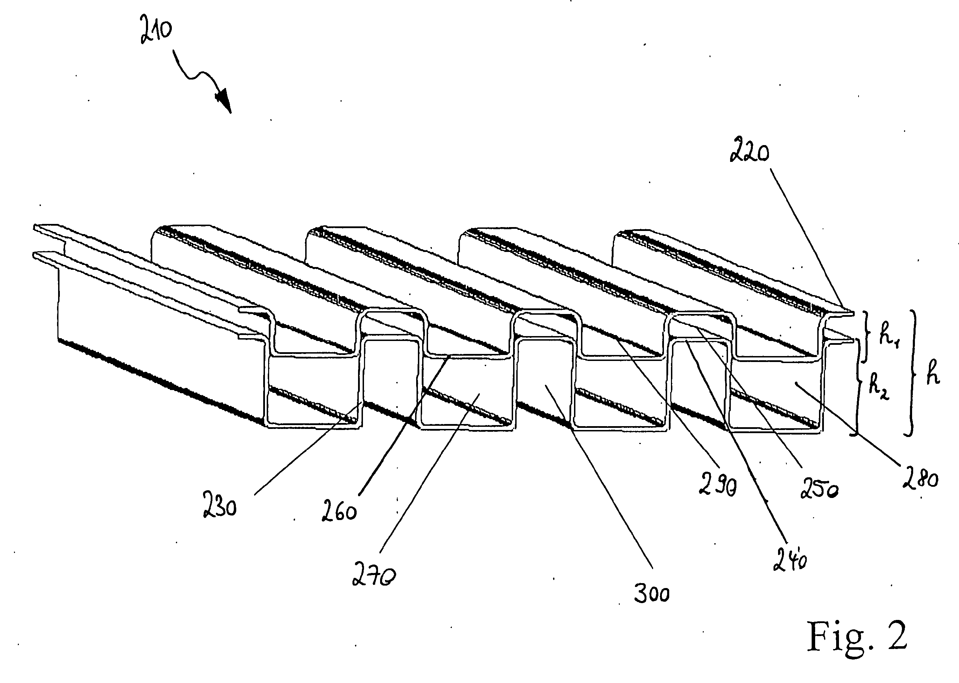

Fig. 2 zeigt eine perspektivische Darstellung eines Ausschnitts aus einer Separatoreinheit 210. Zu sehen sind zwei Platten 220 und 230, die durch ein Prägeverfahren derart umgeformt sind, daß sich beiderseits Fluidkanäle mit dazwischen liegenden Stegen ausbilden. Die Stege 240 auf der Oberseite der Platte 230 besitzen hierbei die gleiche Breite wie die Kanäle 250 auf der Unterseite der Platte 220. Ebenso besitzen die Stege 260 auf der Unterseite der Platte 220 die gleiche Breite wie die Kanäle 270 auf der Oberseite der Platte 230. Dadurch sind die beiden Platten 220 und 230 derart ineinander legbar, daß sich zwischen ihnen dritte Fluidkanäle 250 und 280 zur Beaufschlagung mit einem Kühlfluid ausbilden.

Erste Fluidkanäle 290 auf der Oberseite der Platte 220 und zweite Fluidkanäle 300 auf der Unterseite der Platte 230 dienen der Beaufschlagung nicht gezeigter Elektroden mit Prozeßgasen. Durch das Ineinanderlegen der Platten 220 und 230 ist die Gesamthöhe h der Separatoreinheit 210 kleiner als die Summe der Höhen h₁ der ersten Fluidkanäle 290 und h₂ der zweiten Fluidkanäle 300. Dadurch besitzt die Separatoreinheit 210 eine geringe Bauhöhe h, wodurch sich ein Brennstoffzellenstapel mit geringer Gesamtbauhöhe und damit hoher volumenspezifischer Leistungsdichte zusammensetzen läßt.

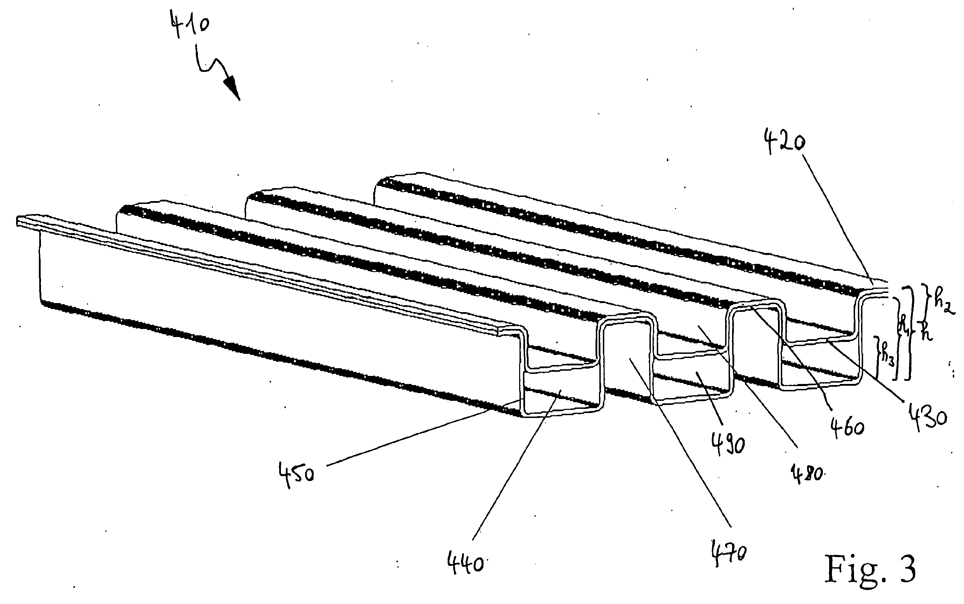

Ein weiteres Ausführungsbeispiel einer Separatoreinheit 410 ist ausschnittsweise in Fig. 3 dargestellt. Im Gegensatz zum vorangegangenen Beispiel ist hier die obere Platte 420 mit den Stegen 430 so weit in die Kanäle 440 der unteren Platte 450 eingelegt, daß zwischen den Stegen 460 der Platte 450 und der Platte 420 kein Zwischenraum gebildet wird. Dadurch ergibt sich die Gesamthöhe der Separatoreinheit aus der Summe der Höhe h1 der ersten Fluidkanäle 470 und der jeweiligen Dicken der Platten 420 und 450. Aufgrund der unterschiedlichen Höhen h₁ und h₂ der ersten Fluidkanäle 470 bzw. zweiten Fluidkanäle 480 werden zwischen den Stegen 430 der Platte 420 und den Kanälen 440 der Platte 450 dritte Fluidkanäle 490 ausgebildet, deren Höhe h₃ sich gerade aus der Differenz der Höhen h₁ der ersten FluidKanäle und der Höhe h₂ der zweiten Fluidkanäle ergibt. Bei dieser Ausführung wird der vorhandene Raum besonders effektiv ausgenutzt, woraus eine besonders hohe volumenspezifische Leistungsdichte des entsprechenden Brennstoffzellenstapels resultiert. Eine besonders raumsparende Bauweise ergibt sich bei Kanalhöhen von h₁ = 1 mm und h₂ = 0,5 mm. Bei einer Planttendicke von 0,1 mm ergibt sich dann für die Höhe der Separatoreinheit ein Wert von h = 1,2 mm und für die dritten Fluidkanäle eine Höhe von h₃ = 0,5 mm, das heißt die dritten Fluidkanäle, die beispielsweise für ein Kühlfluid vorgesehen sind, besitzen hier einen kleineren Querschnitt als die ersten Fluidkanäle für das erste Prozeßgas.

Für eine konstruktive Realisierung eines erfindungsgemäßen Brennstoffzellenstapels ist die Versorgung der ersten, zweiten und dritten Fluidkanäle mit dem ersten, zweiten bzw. dritten Fluid von besonderer Bedeutung.

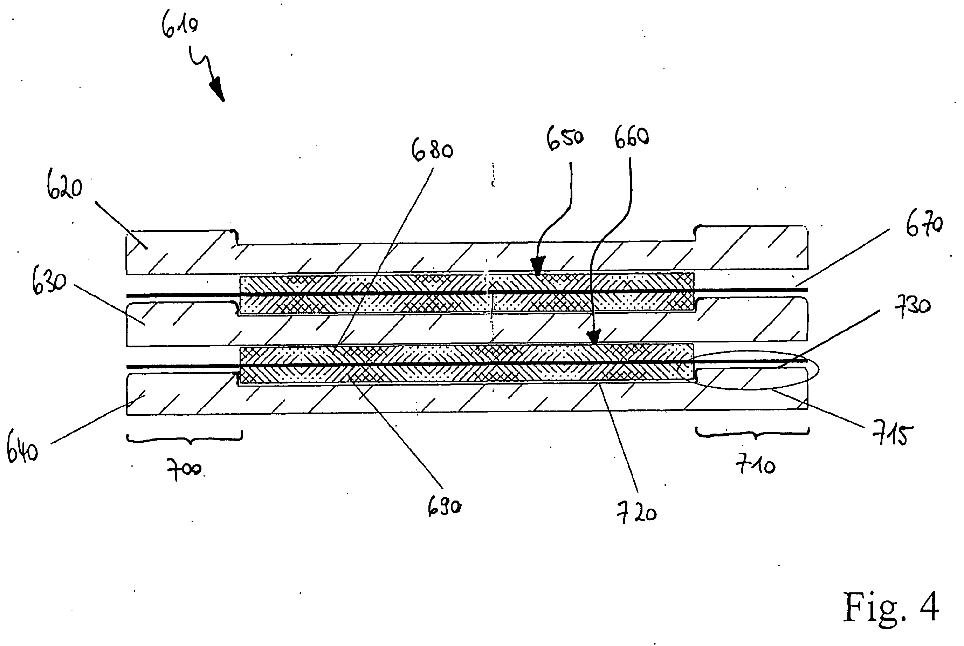

Fig. 4 zeigt eine Querschnittsansicht eines Brennstoffzellenstapels 610, der aus Separatoreinheiten 620, 630, 640 und Brennstoffzellen-MEAs 650, 660 durch wechselweise Stapelung aufgebaut ist. Die Brennstoffzellen-MEAs 650, 660 bestehen hierbei aus einer Elektrolyteinheit 670, die hier durch eine Polymer-Elektrolyt-Membran (PEM) verwirklicht ist und zwei Elektroden 680 und 690, die hier als sogenannte Gasdiffusionselektroden ausgebildet sind.

In den Randbereichen 700 und 710 der Separatoreinheiten 620, 630 und 640 sind nicht gezeigte Sammelkanäle zur Verteilung zweier Prozeßgase und eines Kühlfluids in entsprechende Fluidkanäle in den Brennstoffzellenstapel 610 integriert. Die Verteilung geschieht dabei über ebenfalls nicht sichtbare Verteilkanäle, die ebenfalls in den Randbereichen 700 und 710 der Separatoreinheiten 620, 630 und 640 angeordnet sind. Diese Verteilkammem ragen beispielsweise in dem Bereich 715 der Separatoreinheit 640 über eine Kontaktierungsebene 720 der Separatoreinheit 640 zu der Elektrode 690 hinaus. Die Oberkante 730 der Separatoreinheit 640 ist in diesem Bereich parallel zu der Kontaktierungsebene 720. Die größere Höhe der Separatoreinheiten 620, 630 und 640 in den Randbereichen 700 und 710 ermöglicht eine ausreichende Versorgung von ersten, zweiten und dritten Fluidkanälen in den Separatoreinheiten 620, 630 und 640, bei geringem Druckverlust.

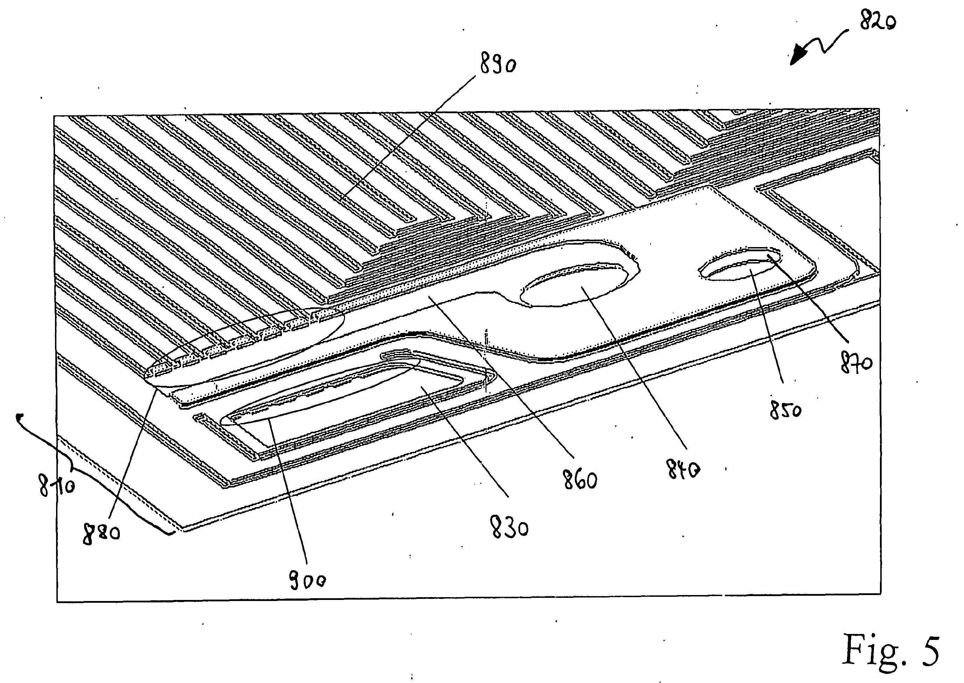

Der Randbereich 810 einer Separatoreinheit 820 zur Verwendung in einem Brennstoffzellenstapel mit Wasserstoff und Sauerstoff als Prozeßgasen und Kühlwasser als Kühlfluid ist in Fig. 5 in einer Schrägansicht dargestellt. Durchbrüche 830, 840 und 850 in der Separatoreinheit 820 dienen der Bildung von Sammelkanälen für Sauerstoff, Wasserstoff bzw. Kühlwasser. Zur Verwirklichung von Verteilkammem 860 und 870, über die die Sammelkanäle 840 bzw. 850 mit beispielsweise den Fluidkanälen 880, die zwischen den Stegen 890 ein zweidimensionales Muster in dem sogenannten Flowfield bilden, kommunizieren, besitzt die Separatoreinheit 820 in dem Randbereich 810 eine größere Bauhöhe als in dem Bereich des Flowfields. Im Gegensatz zu den Sammelkanälen 840 und 850 kommuniziert der Sammelkanal 830 unmittelbar mit den Fluidkanälen 900 für den Sauerstoff.

In dem Flowfieldbereich sind die Fluidkanäle für den Sauerstoff, den Wasserstoff und das Kühlwasser im Wesentlichen zueinander parallel. Dadurch wird eine Aufprägung eines gewünschten Temperaturprofils auf den Flowfieldbereich erleichtert, wobei die verschiedenen Fluidkanäle parallel, das heißt in gleichen Richtungen, oder antiparallel, das heißt in entgegengesetzten Richtungen, durchströmbar sind.

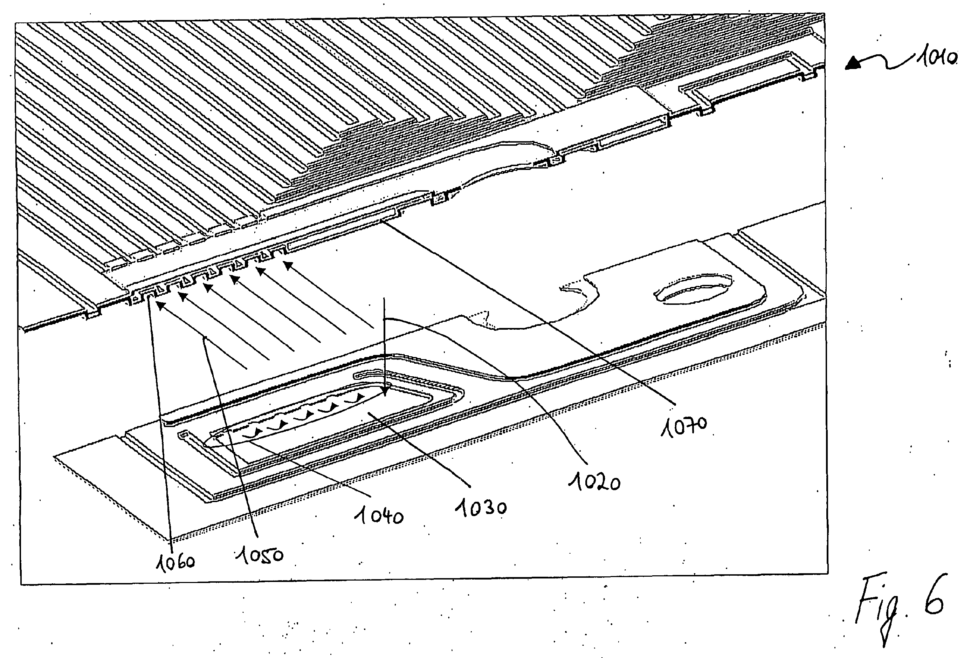

In Fig. 6 ist die Separatoreinheit 1010 in einer aufgebrochenen Schrägansicht dargestellt, um die Verteilung des Prozeßgases Sauerstoff auf die entsprechenden Fluidkanäle zu verdeutlichen. Der Sauerstoff strömt in Richtung des Pfeils 1020 durch den Sammelkanal 1030 und von dort in einem Einströmbereich 1040 in Richtung der Pfeile 1050 unmittelbar in Fluidkanäle 1060, die durch Vertiefungen in der Unterseite der unteren Platte 1070 der Separatoreinheit 1010 gebildet und von einer Gasdiffusionselektrode einer nicht gezeigten angrenzenden Brennstoffzelle begrenzt werden. Die Sammlung des Sauerstoffs erfolgt auf analoge Weise in einem gegenüberliegenden Randbereich der Separatoreinheit 1010.

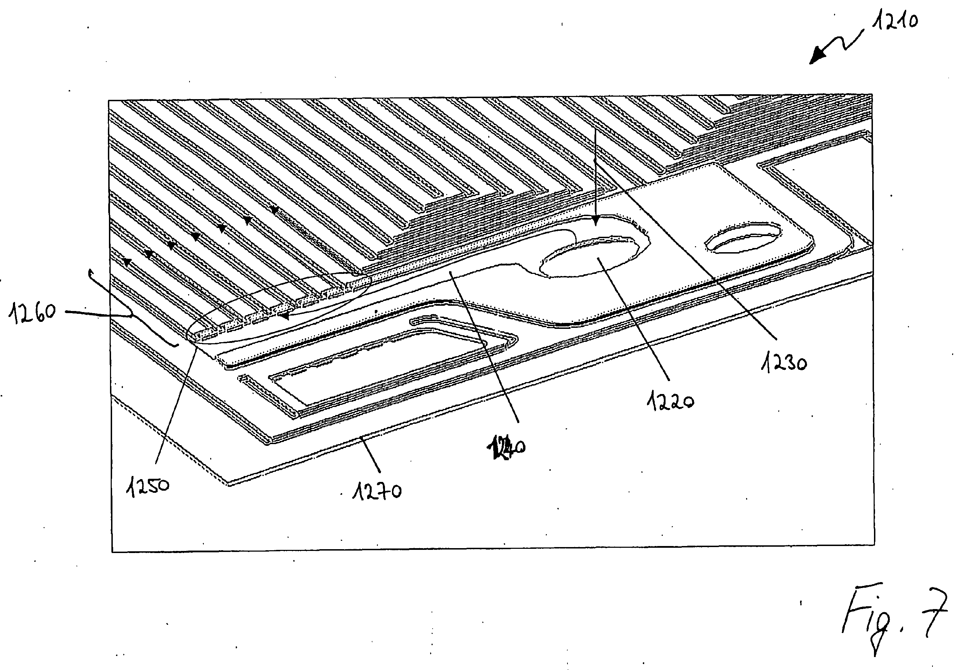

Fig. 7 stellt die Verteilung des Wasserstoffs auf die entsprechenden Fluidkanäle dar. Die Separatoreinheit 1210 weist einen Sammelkanal 1220 auf, durch den der Wasserstoff in Richtung des Pfeils 1230 strömt. Vom Sammelkanal 1220 aus wird der Wasserstoff durch eine Verteilkammer 1240 zu Wasserstoffkanälen 1250 geleitet und auf diese verteilt. Diese Wasserstoffkanäle sind in Richtung der Pfeile 1260 von dem Wasserstoff durchströmbar und werden durch Vertiefungen in der Oberseite der oberen Platte 1270 der Separatoreinheit 1210 gebildet und von einer Gasdiffusionselektrode einer nicht gezeigten angrenzenden Brennstoffzelle begrenzt. Die Sammlung des Wasserstoffs erfolgt auf analoge Weise in einem gegenüberliegenden Randbereich der Separatoreinheit 1210.

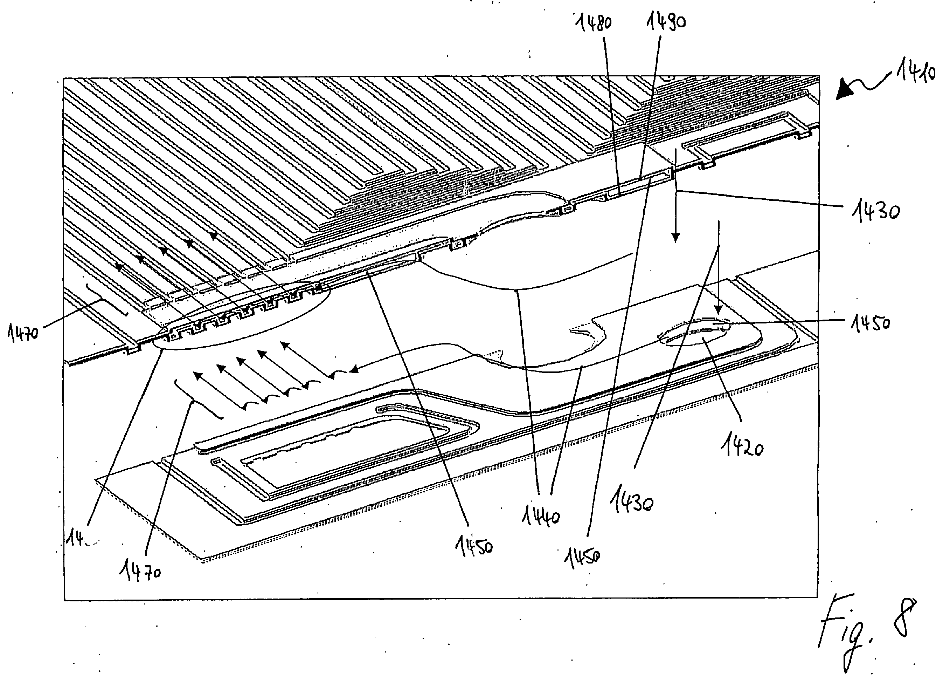

Fig. 8 zeigt die Verteilung des Kühlwassers auf die Kühlfluidkanäle der Separatoreinheit 1410 in aufgebrochener Darstellung. Zur besseren Veranschaulichung ist der Fließverlauf des Kühlmittels jeweils einmal für die beiden Darstellungsbruchstücke gezeigt. Das Kühlwasser durchfließt den Sammelkanal 1420 in Richtung des Pfeils 1430, von wo aus es entlang des Pfeils 1440 durch die Verteilkammer 1450 zu den Kühlfluidkanälen 1460 geleitet und auf diese verteilt wird. Diese in Richtung der Pfeile 1470 von dem Kühlwasser durchströmbaren Kühlfluidkanäle werden durch Hohlräume zwischen den Platten 1480 und 1490, aus denen die Separatoreinheit 1410 besteht, gebildet. Die Sammlung des Kühlwassers erfolgt auf analoge Weise in einem gegenüberliegenden Randbereich der Separatoreinheit 1410.

Die vorliegende Erfindung wurde am Beispiel eines Brennstoffzellenstapels für die Verwendung der Prozeßgase Sauerstoff und Wasserstoff beschrieben. Es wird jedoch darauf hingewiesen, daß der erfindungsgemäße Brennstoffzellenstapel auch für Brennstoffreaktionen mit anderen Brennstoffen geeignet ist.

## Patentansprüche

1. Brennstoffzellenstapel, insbesondere für ein Kraftfahrzeug, mit zumindest einer Brennstoffzellen-MEA, die zumindest eine Elektrolyteinheit, eine erste und eine zweite Elektrode aufweist, und zumindest einer Separatoreinheit, die erste, zweite und dritte Fluidkanäle aufweist, wobei zumindest eine erste Elektrode über zumindest einen ersten Fluidkanal mit einem ersten Fluid und zumindest eine zweite Elektrode über zumindest einen zweiten Fluidkanal mit einem zweiten Fluid beaufschlagbar sind, **dadurch gekennzeichnet, daß** die Summe der Höhen eines ersten und eines zweiten Fluidkanals einschließlich ihrer Kanalwandungen größer als die Höhe der zumindest einen Separatoreinheit ist.

2. Brennstoffzellenstapel nach Anspruch 1, **dadurch gekennzeichnet, daß** sich im Bereich einer aktiven Zellfläche zumindest ein erster Fluidkanal im wesentlichen über die gesamte Höhe der Separatoreinheit erstreckt.

3. Brennstoffzellenstapel nach Anspruch 1 oder 2, **dadurch gekennzeichnet, daß** ein zweiter und ein dritter Fluidkanal im wesentlichen übereinander angeordnet sind.

4. Brennstoffzellenstapel insbesondere nach einem der Ansprüche 1 bis 3, **gekennzeichnet durch** zumindest einen Sammelkanal zur Verteilung eines ersten, zweiten und/oder dritten Fluids auf mehrere dem jeweiligen Fluid zugeordnete Fluidkanäle und zumindest einen Sammelkanal zur Sammlung des ersten, zweiten und/oder dritten Fluids aus den dem jeweiligen Fluid zugeordneten Fluidkanälen.

5. Brennstoffzellenstapel nach Anspruch 4, **dadurch gekennzeichnet, daß** zumindest ein Sammelkanal über eine Verteilkammer mit den dem jeweiligen Fluid zugeordneten Fluidkanälen kommuniziert.

6. Brennstoffzellenstapel nach Anspruch 5, **dadurch gekennzeichnet, daß** die Verteilkammer zumindest bereichsweise über eine Kontaktebene zwischen der Separatoreinheit und einer Elektrode einer benachbarten Brennstoffzellen-MEA hinausragt.

7. Brennstoffzellenstapel nach Anspruch 6, **dadurch gekennzeichnet, daß** die Höhe des herausragenden Bereichs kleiner oder gleich der Höhe der benachbarten Brennstoffzellen-MEA, insbesondere kleiner oder gleich der Höhe der Elektrode der benachbarten Brennstoffzellen-MEA, ist.

8. Brennstoffzellenstapel nach einem der Ansprüche 1 bis 7, **dadurch gekennzeichnet, daß** zumindest eine Separatoreinheit aus zumindest zwei Platten besteht, zwischen denen die dritten Fluidkanäle angeordnet sind.

9. Brennstoffzellenstapel nach Anspruch 8, **dadurch gekennzeichnet, daß** die zumindest zwei Platten fluiddicht miteinander verbunden sind, insbesondere mittels eines Fügeverfahrens wie beispielsweise Löten, Schweißen, Bördeln oder Kleben.

10. Brennstoffzellenstapel nach einem der Ansprüche 1 bis 9, **dadurch gekennzeichnet, daß** zumindest eine Separatoreinheit im wesentlichen aus einem elektrisch leitfähigen Material, wie beispielsweise einem Metall, einer Legierung oder einem Kohlenstoffbasiswerkstoff, besteht.

11. Brennstoffzellenstapel nach einem der Ansprüche 1 bis 10, **gekennzeichnet durch** zumindest zwei verschiedene, in wechselnder Folge gestapelte Separatoreinheiten.

12. Brennstoffzellenstapel nach einem der Ansprüche 1 bis 11, **dadurch gekennzeichnet, daß** die Höhe einer Separatoreinheit abgesehen von Randbereichen der Separatoreinheit zwischen 0,5 mm und 2 mm, insbesondere zwischen 0,8 mm und 1,3 mm, insbesondere 1,0 mm, beträgt.

13. Brennstoffzellenstapel nach einem der Ansprüche 1 bis 12, **dadurch . gekennzeichnet, daß** die Höhe eines ersten Fluidkanals zwischen 0,5 mm und 1,8 mm, insbesondere zwischen 0,7 mm und 1,3 mm, insbesondere 1 mm, beträgt.

14. Brennstoffzellenstapel nach einem der Ansprüche 1 bis 13, **dadurch gekennzeichnet, daß** die Höhe eines zweiten Fluidkanals zwischen 0,1 mm und 1 mm, insbesondere zwischen 0,3 mm und 0,8 mm, insbesondere 0,5 mm, beträgt.

15. Brennstoffzellenstapel nach einem der Ansprüche 1 bis 14, **dadurch gekennzeichnet, daß** die Wandungen von ersten, zweiten und/oder dritten Fluidkanälen eine Dicke aufweisen, die größer oder gleich 0,05 mm und kleiner oder gleich 0,4 mm, insbesondere größer oder gleich 0,1 mm und kleiner oder gleich 0,2 mm, ist.

## Claims

1. Fuel cell stack, in particular for a motor vehicle, with at least one fuel cell MEA comprising at least one electrolyte unit, a first and a second electrode, and with at least one separator unit comprising first, second and third fluid passages, wherein a first fluid can be admitted to at least one first electrode via at least one fluid passage and a second fluid can be admitted to at least one second electrode via at least one second fluid passage, **characterised in that** the sum of the heights of a first and a second fluid passage including its walls is greater than the height of the at least one separator unit.

2. Fuel cell stack according to claim 1, **characterised in that** at least one first fluid passage essentially extends over the entire height of the separator unit in the area of an active cell surface.

3. Fuel cell stack according to claim 1 or 2, **characterised in that** a second and a third fluid passage are essentially arranged above one another.

4. Fuel cell stack, in particular according to any of claims 1 to 3, **characterised by** at least one header for the distribution of a first, second and/or third fluid among a plurality of fluid passages assigned to each fluid, and by at least one header for collecting the first, second and/or third fluid from the fluid passages assigned to each fluid.

5. Fuel cell stack according to claim 4, **characterised in that** at least one header communicates with the fluid passages assigned to each fluid via a distribution chamber.

6. Fuel cell according to claim 5, **characterised in that** the distribution chamber projects at least partially beyond a contact plane between the separator unit and an electrode of an adjacent fuel cell MEA.

7. Fuel cell stack according to claim 6, **characterised in that** the height of the projecting section is less than or equal to the height of the adjacent fuel cell MEA, in particular less than or equal to the height of the electrode of the adjacent fuel cell MEA.

8. Fuel cell stack according to any of claims 1 to 7, **characterised in that** at least one separator unit comprises at least two plates between which the third fluid passages are located.

9. Fuel cell stack according to claim 8, **characterised in that** the two plates are joined to one another in a fluid-tight manner, in particular by means of a joining method such as soldering, welding, flanging or bonding.

10. Fuel cell stack according to any of claims 1 to 9, **characterised in that** at least one separator unit is essentially made of an electrically conductive material, such as a metal, an alloy or a carbon-based material.

11. Fuel cell stack according to any of claims 1 to 10, **characterised by** at least two different separator units stacked in an alternating sequence.

12. Fuel cell stack according to any of claims 1 to 11, **characterised in that** the height of the separator unit, apart from edge areas of the separator unit, is 0.5 mm to 2 mm, in particular 0.8 mm to 1.3 mm, in particular 1.0 mm.

13. Fuel cell stack according to any of claims 1 to 12, **characterised in that** the height of a first fluid passage is 0.5 mm to 1.8 mm, in particular 0.7 mm to 1.3 mm, in particular 1 mm.

14. Fuel cell stack according to any of claims 1 to 13, **characterised in that** the height of a second fluid passage is 0.1 mm to 1 mm, in particular 0.3 mm to 0.8 mm, in particular 0.5 mm.

15. Fuel cell stack according to any of claims 1 to 14, **characterised in that** the walls of the first, second and/or third fluid passages have a thickness greater than or equal to 0.05 mm and less than or equal to 0.4 mm, in particular greater than or equal to 0.1 mm and less than or equal to 0.2 mm.

## Revendications

1. Empilage de cellules d'une pile à combustible, en particulier pour un véhicule automobile, comprenant au moins un assemblage d'électrodes et de membranes (MEA) des cellules d'une pile à combustible qui présente au moins une unité d'électrolyte, une première électrode et une deuxième électrode, et comprenant au moins une unité de séparateur qui présente des premier, deuxième et troisième canaux de fluide, où au moins une première électrode peut être alimentée avec un premier fluide, via au moins un premier canal de fluide, et au moins une deuxième électrode peut être alimentée avec un deuxième fluide, via au moins un deuxième canal de fluide,
**caractérisé en ce que** la somme des hauteurs d'un premier canal et d'un deuxième canal de fluide, y compris leurs parois de canaux, est supérieure à la hauteur d'une unité de séparateur au moins au nombre de un.

2. Empilage de cellules d'une pile à combustible selon la revendication 1, **caractérisé en ce que**, dans la zone d'une surface de cellule active, au moins un premier canal de fluide s'étend pratiquement sur toute la hauteur de l'unité de séparateur.

3. Empilage de cellules d'une pile à combustible selon la revendication 1 ou 2,
**caractérisé en ce qu'**un deuxième canal et un troisième canal de fluide sont disposés pratiquement l'un au-dessus de l'autre.

4. Empilage de cellules d'une pile à combustible, en particulier selon l'une quelconque des revendications 1 à 3,
**caractérisé par** au moins un canal collecteur servant à la répartition d'un premier, d'un deuxième et/ou d'un troisième fluide sur plusieurs canaux de fluide associés au fluide respectif, et par au moins un canal collecteur servant à collecter le premier, le deuxième et/ou le troisième fluide provenant des canaux de fluide associés au fluide respectif.

5. Empilage de cellules d'une pile à combustible selon la revendication 4,
**caractérisé en ce que** au moins un canal collecteur communique avec les canaux de fluide associés au fluide respectif, via une chambre de distribution.

6. Empilage de cellules d'une pile à combustible selon la revendication 5,
**caractérisé en ce que** la chambre de distribution dépasse, au moins par zones, d'un plan de contact entre l'unité de séparateur et une électrode d'un assemblage contigu d'électrodes et de membranes (MEA) des cellules d'une pile à combustible.

7. Empilage de cellules d'une pile à combustible selon la revendication 6,
**caractérisé en ce que** la hauteur de la zone qui dépasse est inférieure ou identique à la hauteur de l'assemblage contigu d'électrodes et de membranes (MEA) des cellules d'une pile à combustible, en particulier inférieure ou identique à la hauteur de l'électrode de l'assemblage contigu d'électrodes et de membranes (MEA) des cellules d'une pile à combustible.

8. Empilage de cellules d'une pile à combustible selon l'une quelconque des revendications 1 à 7, **caractérisé en ce qu'** au moins une unité de séparateur se compose d'au moins deux plaques entre lesquelles sont disposés les troisièmes canaux de fluide.

9. Empilage de cellules d'une pile à combustible selon la revendication 8, **caractérisé en ce que** les plaques, au moins au nombre de deux, sont assemblées l'une à l'autre de manière étanche au fluide, en particulier au moyen d'un procédé d'assemblage tel que par exemple le brasage, le soudage, le sertissage ou le collage.

10. Empilage de cellules d'une pile à combustible selon l'une quelconque des revendications 1 à 9, **caractérisé en ce qu'**une unité de séparateur, au moins au nombre de un, se compose essentiellement d'un matériau électriquement conducteur, comme par exemple d'un métal, d'un alliage ou d'un matériau à base de carbone.

11. Empilage de cellules d'une pile à combustible selon l'une quelconque des revendications 1 à 10, **caractérisé par** au moins deux unités de séparateur différentes empilées suivant un ordre alterné.

12. Empilage de cellules d'une pile à combustible selon l'une quelconque des revendications 1 à 11, **caractérisé en ce que** la hauteur d'une unité de séparateur est comprise, indépendamment de zones de bordure de l'unité de séparateur, entre 0,5 mm et 2 mm, en particulier entre 0,8 mm et 1,3 mm, en particulier égale à 1,0 mm.

13. Empilage de cellules d'une pile à combustible selon l'une quelconque des revendications 1 à 12, **caractérisé en ce que** la hauteur d'un premier canal de fluide est comprise entre 0,5 mm et 1,8 mm, en particulier entre 0,7 mm et 1,3 mm, en particulier égale à 1 mm.

14. Empilage de cellules d'une pile à combustible selon l'une quelconque des revendications 1 à 13, **caractérisé en ce que** la hauteur d'un deuxième canal de fluide est comprise entre 0,1 mm et 1 mm, en particulier entre 0,3 mm et 0,8 mm, en particulier égale à 0,5 mm.

15. Empilage de cellules d'une pile à combustible selon l'une quelconque des revendications 1 à 14, **caractérisé en ce que** les parois des premiers, deuxièmes et/ou troisièmes canaux de fluide présentent une épaisseur qui est supérieure ou égale à 0,05 mm et inférieure ou égale à 0,4 mm, en particulier supérieure ou égale à 0,1 mm et inférieure ou égale à 0,2 mm.
